# EUROPEAN PATENT APPLICATION

(11) **EP 2 127 965 A1**
(43) Date of publication of application: **02.12.2009**
(21) Application number: 09425165.9
(22) Date of filing: 30.04.2009
(51) Int. Cl.: B60R 25/00, G07B 15/00, B60T 3/00

(54) **A system and a method for forced blocking/unblocking of vehicles by means of a combination device**

(30) Priority: 05.05.2008 IT FI20080089
(71) Applicant: Ardovini, Riccardo, 50014 Fiesole (FI) (IT); Franceschi, Vasco, 50121 Firenze (IT)
(72) Inventor: Ardovini, Riccardo, 50014 Fiesole (FI) (IT); Franceschi, Vasco, 50121 Firenze (IT)
(74) Representative: Mannucci, Michele

(57) **Abstract**

The system comprises blocking devices (1) for vehicles, each of the devices being provided with a combination locking device (9) according to a univocal code suitable to allow only to the persons knowing said combination to remove the device. The system also comprises transmission and computing means for managing and opening said blocking devices.

## Description

The present invention relates to a system for forced blocking and subsequent unblocking of vehicles by means of the application of a blocking device for blocking the vehicle.

Currently, for blocking a vehicle parked in a no - parking area a mechanical device is used, called "jaw", which is applied by an operator to a wheel of the vehicle, for example of the type described in the US patent document 7,107,802, which presents three arms, one of which is adjustable so as to adapt to wheels with tires of different diameters and section width. These jaws are fastened to a wheel of a vehicle or removed from it by acting on specific binding bolts by means of specific tools, and therefore the user of the blocked vehicle, in order to unblock it, shall wait for an operator with suitable tools, who is not always immediately available. This results in waits, sometimes with a high personal damage. Furthermore, a belated unblocking of a vehicle can also represent an improper seizure, resulting in legal actions and claims for damages.

The object of the present invention is to provide a system suitable to facilitate the users in getting back quickly the use of the vehicles through means and procedures easy to use.

According to the invention, a blocking device to be applied to a vehicle comprises a combination lock according to a univocal code suitable to allow only to the persons knowing said combination to remove the device.

In an embodiment of the invention suitable for cars, the blocking device is a so called mechanical "jaw" suitable to prevent the wheel, to which it is applied, from rolling, said jaw comprising an arm for fastening to the wheel which can be blocked in position by means of a combination padlock. Preferably, the jaw is of a type that, after opening of the combination padlock, can be removed manually from the wheel without the use of tools.

For blocking two - wheeled vehicles, the system according to the present invention provides for the use of a simple combination padlock, applied so as to prevent the use of the vehicle, for example inserted in a hole of a brake disk of a wheel or blocking the steering wheel of the vehicle by means of a chain.

In a preferred embodiment, the system according to the present invention also comprises communication means for communicating data and computing means comprising a data base, said means being suitable:
- to store the list of the available blocking devices with the respective serial numbers and unblocking codes,
- to receive from the traffic surveillance operators identification and localization data of the vehicles to be blocked and to store them into the data base;
- to receive from the operators that block the vehicles the serial number of the blocking device that they have applied to a given vehicle;
- to receive the numbers of the credit card and of the mobile phone of a user of a blocked vehicle and to perform the payment transaction of the fine for prohibited parking and of the expenses for blocking / unblocking;
- only after having performed said payment transaction, to send automatically to the mobile phone of the user an SMS containing the combination code in order to allow him / her to open the blocking device applied to the respective vehicle.

Through this system, each user of a blocked vehicle can contact, for example by phone, a center provided with these computing and communication means, and perform immediately the payment of the fine and of the expenses related to the blocking of the vehicle. Once the payment has been made, the user immediately receives the combination code of the blocking device applied to his / her vehicle. He / she can therefore proceed directly to open the blocking device and to remove it from his / her own vehicle.

For an easier management of the phases of blocking and unblocking the vehicles, said communication means can also comprise an Internet portal accessible, through respective credentials, to the traffic surveillance operators, to the users of the blocked vehicles and to the operators that apply the blocking devices for sending the relevant data.

In practice, it occurs that some vehicles are repeatedly left in no - parking areas, and they are therefore repeatedly blocked. It is therefore necessary to avoid applying again to a same vehicle a same blocking device, in particular a device having a same code of unlocking combination. Through the system according to the present invention, the operators, who block the vehicles, by accessing to said computing means communicate the serial number of a blocking device that they intend to apply to a given vehicle, and said computing means perform in real time a search in the data base in order to verify whether the combination code for unlocking said device has been already used previously for the same vehicle, confirming or not the operation to the operator.

The system according to the present invention can also comprise collection point for the blocking devices that have been removed by the users of the vehicles for the return thereof. In this case, preferably, each blocking device is provided with a receiving / transmitting RFID device (for example a 868 MHz emitting device according to ISO 18000-6) suitable to transmit locally the serial number of the respective blocking device. Furthermore, receiving / transmitting means are provided in each collection point, suitable to recognize said serial number transmitted by the RFID device and to transmit it to said data base, so as to allow the management of the blocking devices.

The invention also comprises a method for blocking and unblocking a parked vehicle comprising the following phases:
- to apply to the vehicle a blocking device which can be closed by means of a combination lock;
- to store, by means of communication means for communicating data and of computing means comprising a data base, the list of the available blocking devices with the respective serial numbers and unlocking codes;
- to receive from the traffic surveillance operators the identification and localization data of the vehicles to be blocked and to store them into the data base;
- to receive from the operators that block the vehicles the serial number of the blocking device that they have applied to a given vehicle;
- to receive the numbers of the credit card and of the mobile phone of a user of a blocked vehicle and to perform the payment transaction of the fine for prohibited parking and of the expenses for blocking / unblocking;
- only after having performed said payment transaction, to send automatically to the mobile phone of the user an SMS containing the combination code in order to allow him / her to open the blocking device applied to the respective vehicle.

In a preferred embodiment of the present invention, the method also comprises, during the application of the blocking device, a check phase performed by the operator who applies it, who, by means of said communication and computing means, verifies that the device - and in particular the relative unblocking code - which he intends to apply to a given vehicle has not been not already used previously for the same vehicle.

The finding will be better understood following the description and the accompanying drawing, which shows a non limiting example thereof. In the drawing:
figure 1 shows a front view of a blocking jaw applied to a wheel of a vehicle; and
figures 2 and 3 are also partial views respectively according to II-II and III-III of figure 1.

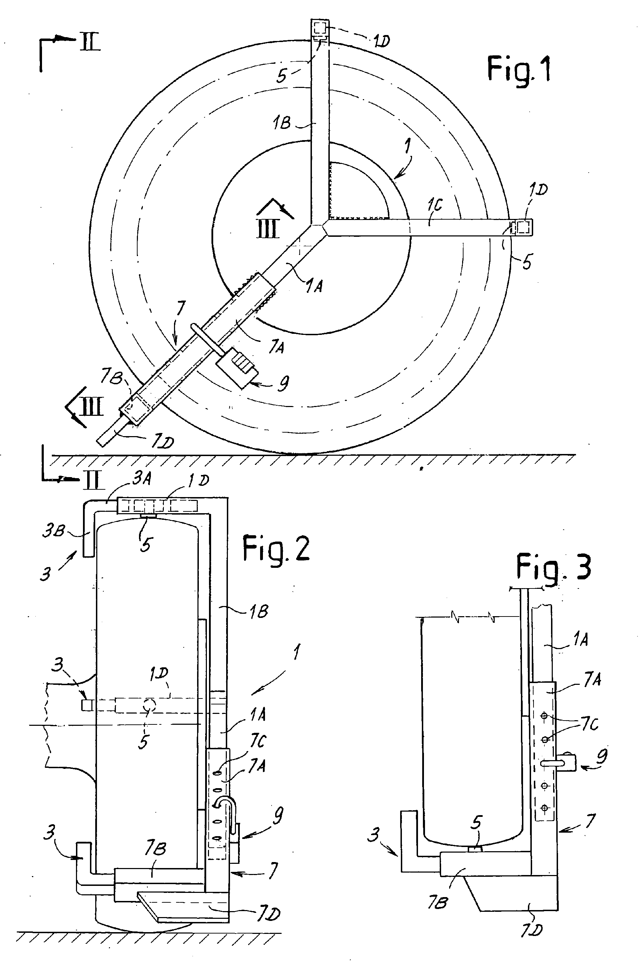

With reference to figures 1 to 3, number 1 indicates a blocking jaw for blocking the wheel of a vehicle of a type with three arms, similar to that cited in the preamble of this patent application, and having three arms 1A, 1B, 1C formed by an hollow drawn product with rectangular section and welded to each other at a respective end near the center of the wheel.

At the peripheral end of each of the arms 1B, 1C, a short section is welded of the same drawn product 1D, 90° oriented relative to the respective arm 1B, 1C to rest on the tread of the tire. Inside each section 1D a segment 3A is inserted of an L - shaped terminal which is fixed here with the segment 3B facing the axis of the wheel. The position of the terminal 3 relative to the remaining part of the jaw can be adjusted according to the width of the tire by sliding it within the thickness of the peripheral segment 1D of the relative arm of the jaw, and fixing is performed by means of a bolt 5 which can be tightened to the segment 1D and having the head from the side of this segment 1D remaining into contact with the tread of the tire once the jaw has been applied. In this way, the terminal 3 cannot be loosened once the jaw has been applied to the wheel.

The third arm 1A can be fixed an L - shaped blocking element 7 obtained by a drawn product suitable to be inserted with an own side 7A on the arm 1A. The other side 7B has an arrangement and a function similar to that of the peripheral segments 1 D of the other arms of the jaw, analogously to which it receives an L - shaped terminal 3 fixed in a position which can be adjusted according to the width of the tire by means of a bolt 5. The radial arm 7A of the blocking element 7 presents a series of through holes 7C suitable to receive a branch of the U of a padlock 9 which is made pass in a through hole of the arm 1A so as to fasten to it the blocking element 7 in a radial position in which the peripheral segments 1 D, 7B of the jaw are all nearly in contact with the periphery of the tire to be blocked. To the peripheral segment 7B a crest 7D is also welded in a peripheral position, suitable to form an obstacle to the rolling of the tire, whilst to the segment 7A a disk 11 is welded, which, when the jaw is mounted, is in a central position on the wheel. The disk 11 serves to cover the access to the bolts fixing the wheel rim to the hub, so as to avoid unblocking of the vehicle simply by removing the wheel with the jaw applied. Furthermore, this disk 11 increases the visibility of the jaw which, at this end, is generally painted with strong yellow or other highlighting color, so as to avoid that the blocked vehicle is moved unintentionally before having removed the jaw.

According to the present invention, the padlock 9 is of the combination type, which can be opened only aligning, according to a preset code, movable elements carrying code digits. To each padlock 9 a serial number and a univocal combination code is assigned, i.e. a code which is not repeated on any other padlock used for blocking the vehicles. Knowing this combination code, it is possible to open the padlock 9, and the jaw 1 can therefore be removed from the tire so as to free the vehicle by extracting the blocking element 7 from the arm 1A. These operations can be performed by anyone manually and without the use of tools.

The blocking system according to the present invention also comprises computing and communication means to facilitate the management of the data of the blocked vehicles and to shorten the waits of the users for the unblocking of their vehicles. With these means is equipped an operation center, which as a quantity of jaws 1 and of the respective combination padlocks 9.

In practice, when a surveillance operator - for example a police officer - detects a vehicle parked in a no - parking area, it leaves a notice on the vehicle which indicates, in addition to the fine report, a telephone number of said operation center for the blocking of the vehicles. Furthermore, the operator sends by phone to this operation center a request for intervention for blocking the vehicle together with the identification data of the vehicle to be blocked, including the license plate, and the relative position, for example through an address or the coordinates detected through GPS.

These data are stored in a computer of the operation center, which identifies an operator available for the application of a jaw 1 to the indicated vehicle. The operator, if he / she does not have a jaw with the relative padlock, by means of the computer memory obtains the information about the site where he / she can take a jaw (for example in a preset collection point), acquires the data of the license plate of the vehicle and of the serial number of the padlock to be applied, having verified that this padlock has not been already used previously for the same license plate, and acquires the data for localizing the vehicle to be blocked. The operator then goes to the site where the vehicle is, applies the jaw with the relative combination padlock 9 and confirms the performed blocking to the operation center by phone.

A user who finds his / her vehicle blocked, contacts the operation center, through the phone number leaved by the police officer on the fine notice for parking in a no - parking area, communicates to the center the license plate number of his / her blocked vehicle and requires instructions for unblocking it, including the amount to be paid for the fine and for the cost for blocking / unblocking the vehicle.

As in a traditional way, the user can ask for the intervention of an operator for the unblocking of the vehicle and the direct payment of the fine and of the cost for the blocking and unblocking operations.

Otherwise, the user can choices to perform the payment through any telematic means (automated teller machines, points of sale in shops such as bars or the like, home banking or other), then informing the operation center about the payment made. In this case the operation center, after having verified that the payment has been made, sends to the user an SMS message indicating the code for unblocking the padlock 9. The user can then proceed alone to open the padlock and to remove the blocking jaw from his / her vehicle, and so he / she can have his / her vehicle back without waiting for an operator.

In this second case the user shall then bring the removed jaw and the padlock to a collection point, indicated on the fine notice which was on the vehicle, and in case of late return or non return he / she will be prosecuted with further expenses.

It is understood that the drawing shows only an example given only as a practical demonstration of the finding, and this finding can vary in the forms and arrangements without departing form the scope of concept that informs the finding itself. Any presence of reference numbers in the appended claims has the purpose of facilitating reading the claims, with reference to the description, and does not limit the scope of protection represented by the claims.

## Claims

1. Blocking system for forced blocking and subsequent unblocking of vehicles by means of a blocking device for blocking a vehicle, which an operator applies based upon identification and localization data of the vehicles to be blocked received by the traffic surveillance operators, **characterized in that** the blocking device comprises a combination lock according to a univocal code suitable to allow only persons knowing said combination to remove the device.

2. A system as claimed in claim 1, **characterized in that** said blocking device is a so called mechanical "jaw" suitable to prevent the wheel, to which it is applied, from rolling, said jaw comprising an adjustable arm for fastening to the wheel which can be blocked in position by means of a combination padlock.

3. A system as claimed in claim 1, **characterized in that** said jaw is of a type that, after opening of the combination padlock, can be removed manually from the wheel without the use of tools.

4. A system as claimed in claim 1, **characterized in that,** for blocking two - wheeled vehicles, a simple combination padlock is used, applied so as to prevent the use of the vehicle, for example inserted in a hole of a brake disk of a wheel or blocking the steering wheel of the vehicle by means of a chain.

5. A system as claimed in one or more of claims 1 to 4, **characterized in that** it comprises communication means and computing means comprising a data base and suitable:
- to store the list of the available blocking devices with the respective serial numbers and unblocking codes,
- to receive from the traffic surveillance operators the identification and localization data of the vehicles to be blocked and to store them into the data base;
- to receive from the operators that block the vehicles the serial number of the blocking device that they have applied to a given vehicle;
- to receive the numbers of the credit card and of the mobile phone of a user of a blocked vehicle and to perform the payment transaction of the fin for prohibited parking and of the expenses for blocking / unblocking;
- only after having performed said payment transaction, to send automatically to the mobile phone of the user an SMS containing the combination code in order to allow him / her to open the blocking device applied to the respective vehicle.

6. A system as claimed in claim 5, **characterized in that** said communication means comprise an Internet portal accessible, through respective credentials, to the traffic surveillance operators, to the users of the blocked vehicles and to the operators that apply the blocking devices for sending the relevant data.

7. A system as claimed in claim 5, **characterized in that,** after the operators that block the vehicles have received the serial number of a blocking device which they intend to apply to a given vehicle, said computing means perform a search in the data base in order to verify whether the code of the combination for opening said device has been already used previously for the same vehicle, and in negative or positive case they automatically send to the operator a confirmation or a denial, respectively, for the use of said blocking device for that vehicle.

8. A system as claimed in one or more of claims 5 to 7, **characterized in that** collection points are provided for the blocking devices when they are returned by the users.

9. A system as claimed in claim 8, **characterized in that** each blocking device is provided with a receiving / transmitting RFID device suitable to transmit locally the serial number of the respective blocking device, and **in that** each collection point is provided with transceivers suitable to identify said serial number and to transmit it to said data base, so as to allow the management of the blocking devices.

10. Method for blocking and unblocking a parked vehicle by means of a blocking system according to one or more of the previous claims, **characterized in that** it comprises the following phases:
- to apply to the vehicle a blocking device which can be closed by means of a combination lock;
- to store, by means of communication means for communicating data and of computing means comprising a data base, the list of the available blocking devices with the respective serial numbers and unlocking codes;
- to receive from the traffic surveillance operators the identification and localization data of the vehicles to be blocked and to store them into the data base;
- to receive from the operators that block the vehicles the serial number of the blocking device that they have applied to a given vehicle;
- to receive the numbers of the credit card and of the mobile phone of a user of a blocked vehicle and to perform the payment transaction of the fine for prohibited parking and of the expenses for blocking / unblocking;
- only after having performed said payment transaction, to send automatically to the mobile phone of the user an SMS containing the combination code in order to allow him / her to open the blocking device applied to the respective vehicle.

11. A method as claimed in claim 10, **characterized in that** it comprises, just before the blocking device has been applied, a check phase performed by the operator who applies it, who, by means of said communication and computing means, verifies that the device - and in particular the relative unblocking code - which he / she intends to apply to a given vehicle has not been already used previously for the same vehicle.

12. A system and a method for forced blocking and subsequent unblocking of vehicles by means of a combination blocking device ; all as described above and represented by way of example in the accompanying drawing.
